(19) Europäisches Patentamt
European Patent Office
Office européen des brevets

(11) **EP 3 065 279 A1**

(12) **EUROPEAN PATENT APPLICATION**
published in accordance with Art. 153(4) EPC

(43) Date of publication:
**07.09.2016 Bulletin 2016/36**

(51) Int Cl.:
***H02M 3/155*** (2006.01)

(21) Application number: **14857091.4**

(22) Date of filing: **10.10.2014**

(86) International application number:
**PCT/JP2014/077141**

(87) International publication number:
**WO 2015/064339 (07.05.2015 Gazette 2015/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.10.2013 JP 2013227566**

(71) Applicants:
• **AutoNetworks Technologies, Ltd.**
**Yokkaichi-shi, Mie 510-8503 (JP)**

• **Sumitomo Wiring Systems, Ltd.**
**Yokkaichi-shi, Mie 510-8503 (JP)**
• **Sumitomo Electric Industries, Ltd.**
**Osaka-shi, Osaka 541-0041 (JP)**

(72) Inventor: **KAWAKAMI, Takafumi**
**Yokkaichi-shi**
**Mie 510-8503 (JP)**

(74) Representative: **Horn Kleimann Waitzhofer**
**Patentanwälte PartG mbB**
**Ganghoferstrasse 29a**
**80339 München (DE)**

(54) **POWER SUPPLY DEVICE AND ABNORMALITY DETERMINATION METHOD FOR POWER SUPPLY DEVICE**

(57)    Provided is a power supply device that is capable of discerning the presence or absence of an abnormality in a specific converter included in multiphase converters, and an abnormality determination method for the power supply device. In the case where a switch Sja is turned ON/OFF for a time period of T1 such that an output voltage (Vo) supplied to a battery 4 and a load 5 by a single converter CVj (j denotes a natural number that is smaller than or equal to n) out of n converters CV1, CV2, ..., and CVn connected in parallel equals a target voltage (Vt), it is determined whether or not the difference between the output voltage (Vo) and the target voltage (Vt) is greater than a predetermined threshold value (Vth). Based on the result of this determination, whether or not an abnormality is present in the converter CVj that has performed the control for turning ON/OFF the switch Sja is determined.

FIG. 1

# Description

## Technical Field

The present invention relates to a power supply device in which a plurality of converters, each converting a DC voltage by performing switching using a switching element, are connected in parallel, and to an abnormality determination method for the power supply device.

## Background Art

DC/DC converters (hereinafter simply referred to as "converters"), which step up or step down a DC voltage in order to convert the DC voltage to a desired DC voltage, are used in various fields. Such converters output a desired voltage by performing switching of the current that flows through an inductor. In particular, a multiphase converter that includes a plurality of converters connected in parallel and that controls the output phase of each converter is used in order to increase the output current while reducing the ripple of the output current, and to reduce the size of the device (see Patent Document 1, for example).

In the multiphase converter disclosed in Patent Document 1, if an abnormality occurs in a switching element included in a given converter and no current can be output from the given converter, output currents from the other converters increase, and hence there is the risk of excessive currents flowing through the switching elements of the other converters and consequently damaging the switching elements.

In contrast, the multiphase chopper (multiphase converter) disclosed in Patent Document 2 is configured to detect an output current at the timings of the rising edges (or the falling edges) of a control signal that turns ON/OFF the switching elements included in the converters for the respective phases connected to a power generator, and to detect a failure in a switching element and limit the output current from the power generator upon a variation being generated in the detected value.

## Citation List

## Patent Documents

Patent Document 1: JP 2002-44941A
Patent Document 2: JP 2013-46541A

## Summary of Invention

## Technical Problem

However, the technology disclosed in Patent Document 2 has the problem that it is impossible to specify the switching element in which a failure has occurred, from among the switching elements included in the converters for the respective phases.

The present invention was made in light of such a situation, and aims to provide a power supply device that is capable of discerning the presence or absence of an abnormality in a specific converter included in a multiphase converter, and an abnormality determination method for the power supply device.

## Solution to Problem

A power supply device according to one aspect of the present invention is a power supply device in which a plurality of converters, each converting a DC voltage by performing switching using a switching element, are connected in parallel, and that supplies, to a load, a sum of output power from the converters, obtained by turning ON respective switching elements of the converters in phases that are different from one another, the power supply device comprising: a driving means for turning ON/OFF the switching element of a given converter out of the converters, for a predetermined period of time, so as to change a voltage that is to be supplied to the load to a predetermined voltage; and a determination means for determining, upon the driving means turning ON/OFF the switching element, whether or not a difference between the voltage to be supplied to the load and the predetermined voltage is greater than a predetermined threshold value.

A power supply device according to one aspect of the present invention is a power supply device in which a plurality of converters, each converting a DC voltage by performing switching using a switching element, are connected in parallel, and that supplies, to a load, a sum of output power from the converters, obtained by turning ON respective switching elements of the converters in phases that are different from one another, the power supply device comprising: a driving means for turning ON/OFF the switching element of only a given converter out of the converters, for a predetermined period of time, so as to change a current that is to be supplied to the load to a predetermined current; and a determination means for determining, upon the driving means turning ON/OFF the switching element, whether or not a difference between the current to be supplied to the load and the predetermined current is greater than a predetermined threshold value.

In the power supply device according to one aspect of the present invention, the driving means is configured to sequentially turn ON/OFF the respective switching elements of all of the converters such that each switching element is turned ON/OFF for a predetermined period of time, and the power supply device further comprises a counting means for counting the number of converters for which the determination means has determined that the difference is greater than the predetermined threshold value.

The power supply device according to one aspect of the present invention further comprises: a storage means for storing therein information that specifies the converters for which the determination means has determined that the difference is greater than the predetermined threshold value; and

a first calculation means for calculating a phase difference with which the switching elements are turned ON, by formula (1) below:

$$\varphi = 2\pi/(n\text{-}m) \quad \text{...... (1)}$$

where

> $\varphi$ denotes the phase difference with which the switching elements are turned ON,
> n denotes the total number of the converters, and
> m denotes the number counted by the counting means,

wherein the driving means is configured to turn ON, with the phase difference calculated by the first calculation means, the respective switching elements of converters other than the converters specified by the information stored in the storage means.

The power supply device according to one aspect of the present invention further comprises: a second calculation means for calculating a current that can be supplied to the load, by formula (2) below:

$$Ia = I1(n\text{-}m) \quad \text{...... (2)}$$

where

> Ia denotes the current that can be supplied to the load,
> I1 denotes a current that can be supplied to the load by a single converter out of the converters,
> n denotes the total number of the converters, and
> m denotes the number counted by the counting means,

wherein a current to be supplied to the load is controlled to be smaller than the current calculated by the second calculation means.

In the power supply device according to one aspect of the present invention, each converter: has an inductor to which the DC voltage is applied via the switching element; and is configured to step down or step up the DC voltage by performing switching of a current that flows through the inductor, using the switching element.

In the power supply device according to one aspect of the present invention, each converter has a second switching element for circulating the current that flows through the corresponding inductor during an OFF period of the corresponding switching element.

An abnormality determination method for a power supply device according to one aspect of the present invention is an abnormality determination method for a power supply device in which a plurality of converters, each converting a DC voltage by performing switching using a switching element, are connected in parallel, and that supplies, to a load, a sum of output power from the converters, obtained by turning ON respective switching elements of the converters in phases that are different from one another, the abnormality determination method being for determining whether or not the converters are abnormal, the abnormality determination method comprising turning ON/OFF the switching element of only a given converter out of the converters, for a predetermined period of time, so as to change a voltage (or a current) that is to be supplied to the load to a predetermined voltage (or a predetermined current); determining whether or not a difference between the voltage (or the current) to be supplied to the load and the predetermined voltage (or the predetermined current) is greater than a predetermined threshold value; and determining that the given converter is abnormal upon determining that the difference is greater than the predetermined threshold value.

In one aspect of the present invention, upon the driving means turning ON/OFF, for a predetermined period of time, a switching element of only a given converter out of the converters connected in parallel, so as to change a voltage that is to be supplied to the load to a predetermined voltage, the determination means determines whether or not a difference between the voltage to be supplied to the load and the predetermined voltage is greater than a predetermined threshold value.

Whether or not an abnormality is present in a given converter that has performed the control for turning ON/OFF the switching element is determined based on the result of this determination.

In one aspect of the present invention, upon the driving means turning ON/OFF, for a predetermined period of time, a switching element of only a given converter out of the converters connected in parallel, so as to change a current that is to be supplied to the load to a predetermined current, the determination means determines whether or not a difference between the current to be supplied to the load and the predetermined current is greater than a predetermined threshold value.

Whether or not an abnormality is present in a given converter that has performed the control for turning ON/OFF the switching element is determined based on the result of this determination.

In one aspect of the present invention, the driving means sequentially turns ON/OFF the respective switching elements of all of the converters connected in parallel such that each switching element is turned ON/OFF for a predetermined period of time, and each time, the determination means determines whether or not the difference between the output voltage and the predetermined voltage or the difference between the output current or the predetermined current is greater than the predetermined threshold value, and the counting means counts the number of converters for which the determination means has determined that the difference is greater than the predetermined threshold value.

Consequently, it is possible to specify all the converters in which an abnormality is present, and to perform procedures according to the number of the specified converters.

In one aspect of the present invention, the storage means stores therein information that specifies the converters in which an abnormality regarding the output voltage or the output current has been detected, and the driving means turns ON, with the phase difference calculated by the first calculation means by the formula (1) below, the respective switching elements of converters other than the converters specified by the information thus stored:

$$\varphi = 2\pi/(n\text{-}m) \ \dots\dots \ (1)$$

where

$\varphi$ denotes the phase difference with which the switching elements are turned ON,
n denotes the total number of the converters, and
m denotes the number counted by the counting means.

Consequently, the switching elements of the converters in which no abnormality is present are turned ON with equal phase differences.

In one aspect of the present invention, the output current to be supplied to the load is controlled to be smaller than the current calculated by the second calculation means by formula (2) below:

$$Ia = I1(n\text{-}m) \dots\dots \ (2)$$

where

Ia denotes the current that can be supplied to the load,
I1 denotes a current that can be supplied to the load by a single converter out of the converters,
n denotes the total number of the converters, and
m denotes the number counted by the counting means.

Consequently, the maximum output current is limited according to the number of converters in which no abnormality is present.

In one aspect of the present invention, a DC voltage is applied to each of the respective inductors of the converters via the corresponding switching element, and each converter steps down or steps up the input DC voltage by performing switching of a current that flows through the inductor, using the switching element.

Consequently, it is determined whether or not an abnormality is present in a given converter that has performed the control for turning ON/OFF the corresponding switching element in both the case where the converter steps down a DC voltage and the case where the converter steps up a DC voltage.

In one aspect of the present invention, the second switching element of each converter circulates the current that flows through the corresponding inductor during the OFF period of the corresponding switching element.

Consequently, the conversion efficiency is improved compared to the case of using diodes instead of the second switching elements.

Advantageous Effects of Invention

According to one aspect of the present invention, whether or not an abnormality is present in a given converter that has performed the control for turning ON/OFF the switching element is determined.

Therefore, it is possible to discern the presence or absence of an abnormality in a specific converter in a multiphase converter.

Brief Description of Drawings

FIG. 1 is a block diagram showing an example of a configuration of a power supply device according to Embodiment 1 of the present invention.
FIG. 2 is a timing chart showing PWM control signals for a test respectively supplied to driving circuits in the power supply device according to Embodiment 1 of the present invention.
FIG. 3 is a flowchart showing processing procedures carried out by a CPU to determine whether or not converters in the power supply device according to Embodiment 1 of the present invention are abnormal.
FIG. 4 is a block diagram showing an example of a configuration of a power supply device according to Embodiment 2 of the present invention.
FIG. 5 is a timing chart showing PWM control signals for a test respectively supplied to driving circuits in a power supply device according to Embodiment 3 of the present invention.
FIG. 6 is a flowchart showing processing procedures carried out by a CPU to determine whether or not converters in the power supply device according to Embodiment 3 of the present invention are abnormal.

Description of Embodiments

The following provides a detailed description of the present invention based on drawings showing its embodiments.

Embodiment 1

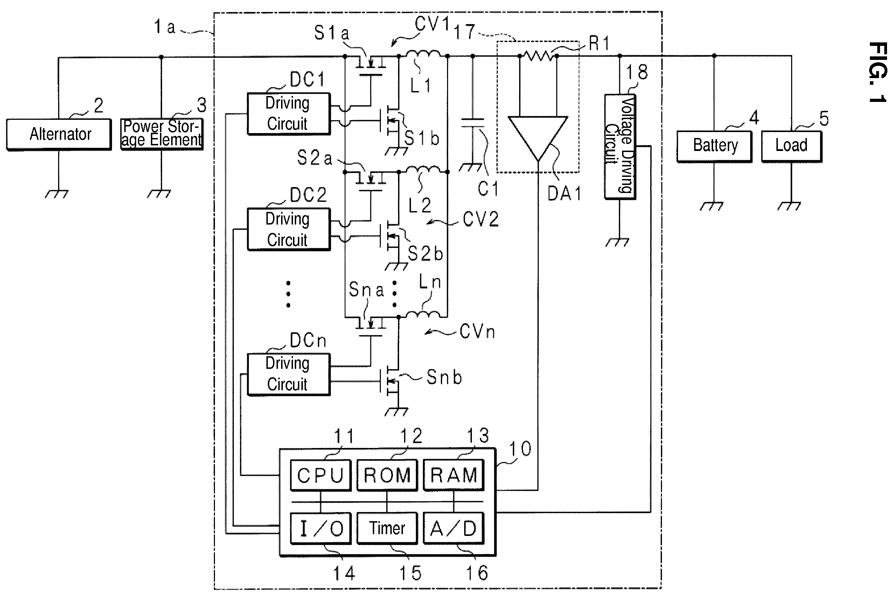

FIG. 1 is a block diagram showing an example of a configuration of a power supply device according to Embodiment 1 of the present invention. In the drawing, la denotes a power supply device that is mounted on a vehicle. The power supply device la steps down a DC voltage generated by an alternator 2 in conjunction with an engine of the vehicle, and a DC voltage from a power storage element 3 charged by the alternator 2, and supplied the DC voltages to a battery 4 and a load 5 that are mounted on the vehicle.

The power supply device la includes: n converters CV1, CV2, ..., and CVn (n denotes a natural number that is greater than or equal to 2) that step down the DC voltages from the alternator 2 and the power storage element 3; driving circuits DC1, DC2, ..., and DCn that drive the converters CV1, CV2, ..., and CVn, respectively; and a control unit 10 that supplies PWM control signals S1, S2, ..., and Sn to the driving circuits DC1, DC2, ..., and DCn, respectively. The converters CV1, CV2, ..., and CVn are so-called multiphase converters connected in parallel. The output voltage and the output current that have been stepped down from a DC voltage and have been smoothed by a capacitor C1 are supplied to the battery 4 and the load 5 via a current detection circuit 17.

The current detection circuit 17 includes a resistor R1 and a differential amplifier DA1. The voltage step-down at the resistor R1 caused by the output current is amplified by the differential amplifier DA1, and a detection voltage is generated according to the output current. The output voltage is applied to a voltage-dividing circuit 18 as well so that the divided voltage that is proportional to the output voltage and the detection voltage from the current detection circuit 17 are fed back to the control unit 10.

A given converter CVk (k denotes a natural number that is smaller than or equal to n. The same applies hereinafter) includes: a switching element (hereinafter simply referred to as "switch") Ska that is configured with an N-channel type MOSFET to whose drain the DC voltage from the alternator 2 and the power storage element 3 is applied; an inductor Lk with one end connected to the capacitor C1 and the other end connected to the source of the switch Ska; and a switch (second switching element) Skb whose source is grounded and whose drain is connected to the connection point of the switch Ska and the inductor Lk. The switches Ska and Skb may be P-channel type MOSFETs or other kinds of switching elements such as bipolar transistors.

A given driving circuit DCk applies an ON signal to the gates of the switches Ska and Skb, based on a PWM control signal Sk supplied by the control unit 10. The ON signals are for alternatingly turning ON the switches Ska and Skb respectively, in each control cycle. The gate of the switch Skb is supplied with an ON signal that has a phase that is substantially the inverse of the phase of the ON signal supplied to the gate of the switch Ska, and that has a so-called dead time set aside.

The switch Skb may be replaced with a diode whose anode is connected to the ground potential. Here, however, the switch Skb, which has a lower ON resistance than a diode, performs so-called synchronous rectification, and losses in the converter CVk are thus reduced. If the current flowing through the inductor Lk flows backward due to synchronous rectification when the converter CVk has a light load, a resistor may be inserted in series with the inductor Lk to detect the current flowing through the inductor Lk, and the ON signal to the switch Skb may be stopped by the driving circuit DCk when a backflow is detected, for example.

The control unit 10 is configured with a microcomputer that includes a CPU 11. Via a bus, the CPU 11 is connected to: a ROM 12 that stores therein information such as a program; a RAM 13 that stores therein information that is temporarily generated; an I/O port 14 that serves as an interface with each of the driving circuits DC1, DC2, ..., and DCn; a timer 15 that measures time; and an A/D converter 16 that converts an analogue voltage to a digital voltage value. The divided voltage from the output voltage fed back to the control unit 10, and the detection voltage from the current detection circuit 17, are supplied to the A/D converter 16.

In the above-described configuration, when performing a control focusing on the output voltage for example, the control unit 10 supplies the PWM control signals S1, S2, ..., and Sn respectively to the driving circuits DC1, DC2, ..., and DCn such that the duty ratio is changed to be small or large according to whether an error voltage obtained by comparison between an internal reference voltage (not shown in the drawings) and the divided voltage from the voltage-dividing circuit 18 is high or low. The output voltage is thus controlled to be a constant voltage corresponding to the reference voltage.

In order to prevent the output current from exceeding a predetermined current, the control unit 10 also limits an increase in the duty ratio of the PWM control signals S1, S2, ..., and Sn to be respectively supplied to the driving circuits DC1, DC2, ..., and DCn, based on the detection voltage from the current detection circuit 17. If no abnormality is present in the converters CV1, CV2, ..., and CVn, the PWM control signals S1, S2, ..., and Sn respectively supplied to the driving circuits DC1, DC2, ..., and DCn have a phase difference of $2n/n$ from one another in each control cycle.

The currents respectively flowing from the alternator 2 and the power storage element 3 to the inductors L1, L2, ..., and Ln are subjected to switching due to the ON signals respectively supplied from the driving circuits DC1, DC2, ..., and DCn to the switches S1a, S2a,

..., and Sna with a phase difference of $2n/n$, and the currents flowing through the inductors L1, L2, ..., and Ln respectively circulate through the switches S1b, S2b, ..., and Snb during the respective OFF periods of the switches S1a, S2a, ..., and Sna.

Thus, the currents with phase differences of $2n/n$ flowing from the respective ends of the inductors L1, L2, ..., and Ln to the battery 4 and the load 5 are added to each other, and consequently the output powers from the converters CV1, CV2, ..., and CVn are added to each other. The timing chart showing the temporal relationship between: the ON signals with phase differences of $2n/n$, respectively supplied to the switches S1a, S2a, ..., and Sna; the currents flowing through the inductors L1, L2, ..., and Ln; and the output current with a reduced ripple, resulting from the addition, is described in detail in Patent Document 2 above, and therefore a description thereof is omitted here.

In Embodiment 1, the CPU 11 determines the presence or absence of an abnormality by driving the converters CV1, CV2, ..., and CVn one by one for a test while the power supply device 1a is not operating, and upon determining that any of the converters are abnormal, operates the power supply device 1a by driving the converters other than the converters determined as being abnormal.

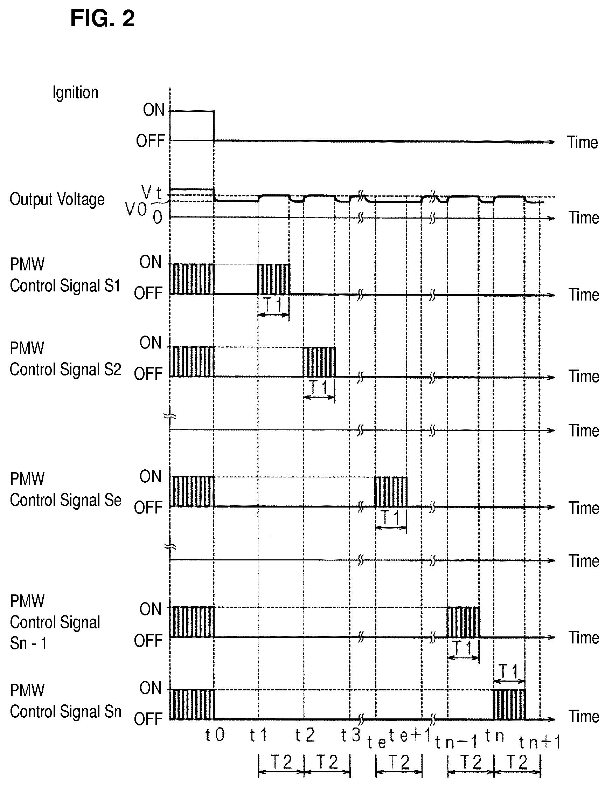

FIG. 2 is a timing chart showing the PWM control signals S1, S2, ..., and Sn for a test respectively supplied to the driving circuits DC1, DC2, ..., DCn in the power supply device 1a according to Embodiment 1 of the present invention.

FIG. 2 shows the case of an abnormality occurring in a driving circuit DCe (e denotes a natural number that is no less than 3 and no greater than n-2, for example). In each of the seven timing charts shown in FIG. 2, the horizontal axis is the time axis, and the vertical axis indicates, from top to bottom of the drawing, the ON/OFF state of the ignition, the output voltage, the OFF/ON state of the PWM control signal S1, the OFF/ON state of the PWM control signal S2, ..., the OFF/ON state of the PWM control signal Se, ..., the OFF/ON state of the PWM control signal Sn-1, and the OFF/ON state of the PWM control signal Sn.

The ON/OFF state of the ignition is obtained by the CPU 11 communicating with other ECUs by using a communication unit (not shown in the drawings) included in the control unit 10, for example. While the state of the ignition is ON, each of the PWM control signals S1, S2, ..., Se, ..., and Sn switches ON/OFF under the control of the CPU 11. In FIG. 2, the PWM control signals S1, S2, ..., Se, ..., and Sn are illustrated as if they are switched ON/OFF in the same phase. In reality, however, they have a phase difference of $2n/n$ from one another.

If the state of the ignition changes from the ON state to the OFF state at a point in time t0, the PWM control signals S1, S2, ..., Se, ..., and Sn stop, and the converters CV1, CV2, ..., and CVn stop being driven. Therefore, the output voltage from the power supply device 1a decreases and converges to the voltage of the battery 4 before or at a point in time t1. Here, the output voltage at the point in time t1, in other words, the voltage of the battery 4, is assumed to be V0.

During the period from the point in time t1 to the point in time tn+1, the CPU 11 sequentially generates the PWM control signals S1, S2, ..., Se, ..., and Sn at time intervals of T2 such that each signal is generated for a time period of T1 (predetermined time period: T2>T1). The target output voltage is, for example, a voltage Vt (a predetermined voltage: Vt=V0+0.4 V) that is greater than the aforementioned voltage V0 by 0.4 V. The difference between the voltages Vt and V0 is not limited to 0.4 V.

If the generation of the PWM control signal S1 is started at the point in time t1, the CPU 11 detects the output voltage at the time when the time period of T1 has elapsed since the point in time t1, and then stops generating the PWM control signal S1. If the difference between the output voltage detected at this time and the voltage Vt is greater than a predetermined threshold value, the converter CV1 is determined as being abnormal. In the example shown in FIG. 2, the output voltage at the time when the time period of T1 has elapsed since the point in time t1 is substantially equal to the voltage Vt, and hence the converter CV1 is not determined as being abnormal.

Subsequently, the CPU 11 starts generating the PWM control signal S2 at the point in time t2, which is when the time period of T2 has elapsed since the point in time t1, detects the output voltage when the time period of T1 has elapsed since the point in time t2, and then stops generating the PWM control signal S2. Whether or not the converter CV1 is abnormal is determined based on the output voltage detected at this time, in the same manner as in the case of CV1. Thereafter, the determination of the presence or absence of an abnormality is repeatedly performed in the same manner until the determination as to the converters CVn-1 and CVn completes.

While the CPU 11 repeats the determination of an abnormality in the converters CV1, CV2, ..., and CVn, if the difference between the output voltage and the voltage Vt is greater than the predetermined threshold value (e.g., 0.2 V) even though the CPU 11 continuously supplies the PWM control signal Se to the converter CVe for a time period of T1 from a point in time te (see FIG. 2), the converter CVe is determined as being abnormal. The first conceivable reason for the abnormality in the converter CVe is an open fault of the switch Sea. For example, there can be cases where the detected output voltage is higher than the voltage Vt (not shown in the drawings), depending on the nature of the failure that has occurred in the driving circuit DCe.

The following describes the operations of the control unit 10 above, using a flowchart showing the operations. The following processing is executed by the CPU 11 of the control unit 10 according to a control program that has been stored in the ROM 12 in advance.

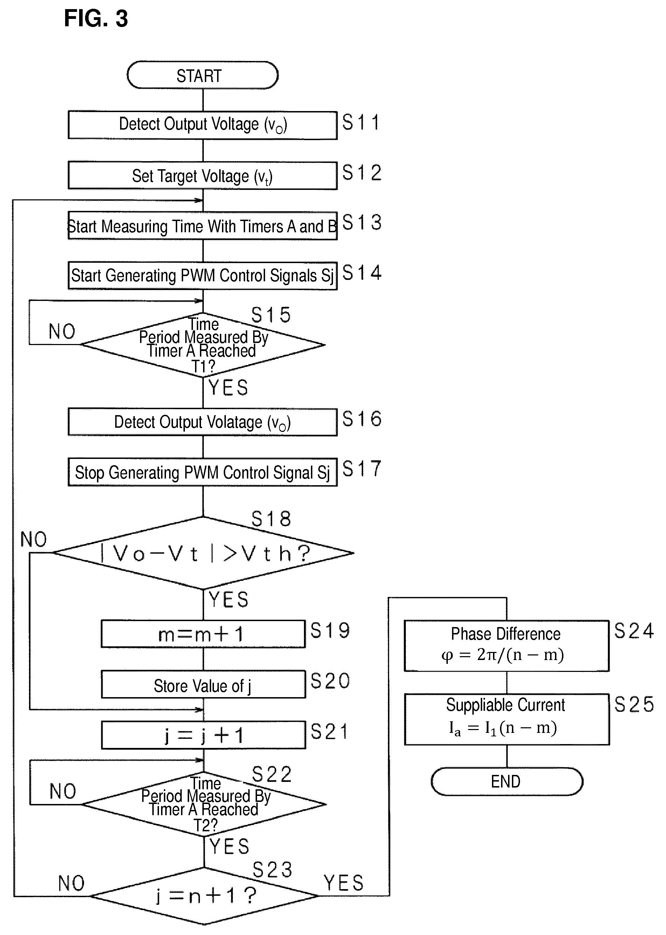

FIG. 3 is a flowchart showing processing procedures carried out by the CPU 11 to determine whether or not the converters CV1, CV2, ..., and CVn in the power supply device 1a according to Embodiment 1 of the present invention are abnormal.

The processing shown in FIG. 3 is started up at, for example, the point in time t1, which is when an appropriate time period has elapsed since the ignition was changed from the ON state to the OFF state at the point in time t0 (see FIG. 2). However, the processing may be started up when the power supply device 1a is initialized, when the operations are temporarily suspended, or the like. Variables j and m used in the processing shown in the drawing are stored in a register of the CPU 11, and have been initialized through initialization processing, which is not shown in the drawings, so as to satisfy j=1 and m=0. The RAM 13 has a specific area for storing therein a plurality of values of the variable j. The specific area has been initialized and has been brought into the state of storing nothing.

Upon the processing shown in FIG. 3 being started up, the CPU 11 detects the output voltage (Vo) using the voltage-dividing circuit 18 and the A/D converter 16 (S11), and sets the target voltage (Vt), which is higher than the detected output voltage Vo by 0.4 V for example, as the predetermined voltage for a test (S12). Subsequently, the CPU 11 starts measuring time using two timers A and B included in the timer 15 (S13), and then starts generating a PWM control signal Sj (S14). From this point in time, the duty ratio of the PWM control signal Sj is controlled such that the output voltage of a converter CVj equals the target voltage (Vt).

Then, the CPU 11 determines whether or not the time period measured by the timer A has reached the time period of T1 (S15), and upon determining that the time period measured by the timer A has not reached the time period of T1 (S15: NO), waits until the time period measured by the timer A reaches the time period of T1 Upon determining that the time period measured by the timer A has reached the time period of T1 (515: YES), the CPU 11 detects the output voltage (Vo) (S16), and then stops generating the PWM control signal Sj (S17). Steps S13, S14, S15, and S17 correspond to the driving means.

Subsequently, the CPU 11 determines whether or not the difference (|Vo-Vt|) between the detected output voltage (Vo) and the target voltage (Vt) is greater than a predetermined threshold value Vth (e.g., 0.2 V) (S18: corresponding to the determination means), and if the difference is not greater than the predetermined threshold value Vth (S18: NO), i.e., if the converter CVj is determined as being not abnormal, the CPU 11 proceeds to step S21 described below.

If the difference between the output voltage (Vo) and the target voltage (Vt) is greater than the predetermined threshold value Vth (S18: YES), i.e., if the converter CVj is determined as being abnormal, the CPU 11 increments m by 1 (S19: corresponding to the counting means) and stores the value of j in the specific area of the RAM 13 (S20: corresponding to the storage means). Consequently, information j that specifies the converter CVj that has been determined as being abnormal is stored in the RAM 13.

Subsequently, the CPU 11 increments the value of j by 1 (S21), and then determines whether or not the time period measured by the timer B has reached the time period of T2 (S22). Upon determining that the time period measured by the timer B has not reached the time period of T2 (S22: NO), the CPU 11 waits until the time period measured by the timer B reaches the time period of T2. Upon determining that the time period measured by the timer B has reached the time period of T2 (S22: YES), the CPU 11 determines whether or not j is equal to n+1 (S23). Upon determining that j is not equal to n+1 (523: NO), the CPU 11 proceeds to step S13 in order to start generating the subsequent PWM control signal Sj.

Upon determining that j is equal to n+1 (S23: YES), the CPU 11 calculates, by $\varphi=2\pi/(n-m)$, a phase difference $\varphi$ between the PWM control signals for respectively driving the plurality of converters that have not been determined as being abnormal (S24: corresponding to the first calculation means), and stores the phase difference $\varphi$ thus calculated to the RAM 13. The CPU 11 also calculates, by $Ia=I1(n-m)$, a suppliable current Ia that can be supplied by the plurality of converters that have not been determined as being abnormal (S25: corresponding to the second calculation means). The CPU 11 stores the suppliable current Ia thus calculated to the RAM 13, and then ends the processing shown in FIG. 3. Note that I1 denotes the current that can be supplied to the battery 4 and the load 5 by a single converter CVk.

In the case of operating the power supply device 1a, the CPU 11 generates the PWM control signals S1, S2, ..., and Sn (note that the PWM control signals for the converters that have been determined as being abnormal are excluded), based on the phase difference $\varphi$ calculated and stored in the RAM 13 by the processing above. In this case, the CPU 11 controls the output current so as not to exceed the suppliable current Ia stored in the RAM 13.

As described above, according to Embodiment 1, in the case where the CPU 11 turns ON/OFF the switch Sja for a time period of T1 such that the output voltage (Vo) supplied to the battery 4 and the load 5 by a single converter CVj (j denotes a natural number that is smaller than or equal to n) out of n converters CV1, CV2, ..., and CVn connected in parallel equals the target voltage (Vt), the CPU 11 determines whether or not the difference between the output voltage (Vo) and the target voltage (Vt) is greater than the predetermined threshold value (Vth).

Based on the result of this determination, whether or not an abnormality is present in the converter CVj that has performed the control for turning ON/OFF the switch Sja is determined.

Therefore, it is possible to discern the presence or absence of an abnormality in a specific converter out of multiphase converters.

Also, according to Embodiment 1, the CPU 11 sequentially turns ON/OFF the respective switches S1a, S2a, ..., and Sna of all of the n converters CV1, CV2, ..., and CVn connected in parallel such that each switch is turned ON/OFF for a time period of T1. Each time, the CPU 11 determines whether or not the difference between the output voltage (Vo) and the target voltage (Vt) is greater than the predetermined threshold value (Vth), and counts the number (m) of converters for which the difference is determined as being greater than the predetermined threshold value (Vth).

Consequently, it is possible to specify all the converters in which an abnormality is present, and to perform procedures according to the number (m) of the specified converters.

Furthermore, according to Embodiment 1, the CPU 11 stores, in the RAM 13, information that specifies the converter in which an abnormality regarding the output voltage or the output current has been detected (specifically, the information is the value of j at the time an abnormality is detected during the process of incrementing j), and turns ON the switches of the (n-m) converters other than the m converters specified by the stored information, with the phase difference φ calculated by φ=2π/(n-m).

Consequently, it is possible to turn ON the switches of the converters in which no abnormality is present, with equal phase differences.

Furthermore, according to Embodiment 1, the output current supplied to the battery 4 and the load 5 by the (n-m) converters other than the converters in which an abnormality has been detected is controlled such that the output current becomes smaller than the current Ia calculated by Ia= I1(n-m).

Consequently, it is possible to limit the maximum output current according to the number of converters in which no abnormality is present.

Embodiment 2

Embodiment 1 is an embodiment in which the converters CV1, CV2, ..., and CVn step down a DC voltage, whereas Embodiment 2 is an embodiment in which the converters CV1, CV2, ..., and CVn step up a DC voltage.

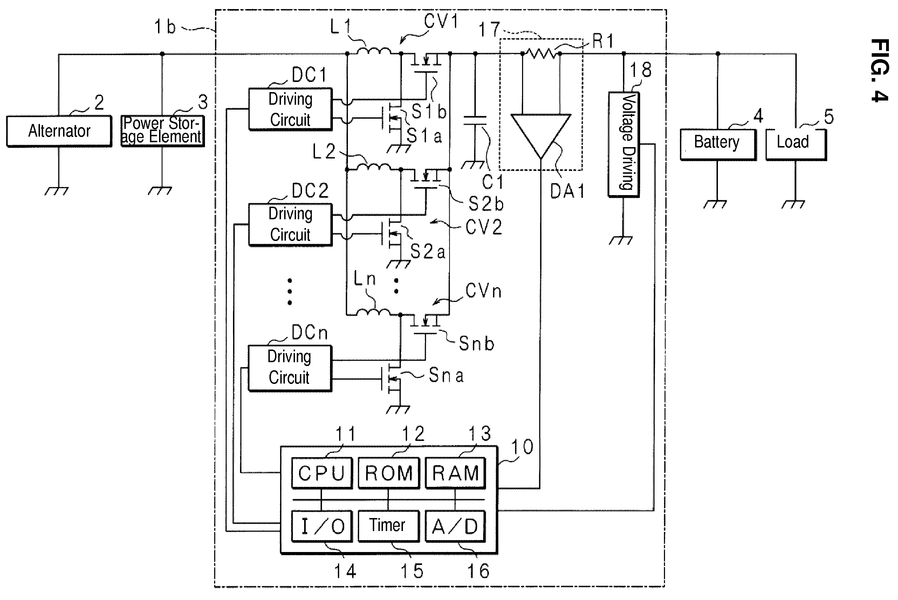

FIG. 4 is a block diagram showing an example of a configuration of a power supply device 1b according to Embodiment 2 of the present invention. The power supply device 1b shown in FIG. 4 is different from the power supply device 1a shown in FIG. 1 according to Embodiment 1 in the configuration of each of the converters CV1, CV2, ..., and CVn.

The power supply device 1b includes: n converters CV1, CV2, ..., and CVn (n denotes a natural number that is greater than or equal to 2) that step up the DC voltages from the alternator 2 and the power storage element 3; driving circuits DC1, DC2, ..., and DCn that drive the converters CV1, CV2, ..., and CVn, respectively; and a control unit 10 that supplies PWM control signals S1, S2, ..., and Sn to the driving circuits DC1, DC2, ..., and DCn, respectively. The converters CV1, CV2, ..., and CVn are so-called multiphase converters connected in parallel. The output voltage and the output current that have been stepped up from a DC voltage and have been smoothed by a capacitor C1 are supplied to the battery 4 and the load 5 via a current detection circuit 17.

A given converter CVk (k denotes a natural number that is smaller than or equal to n. The same applies hereinafter) includes: an inductor Lk with one end applied with a DC voltage supplied from the alternator 2 and the power storage element 3; a switch (switching element) Ska whose drain is connected to the other end of the inductor Lk and whose source is grounded; and a switch (second switching element) Skb whose source is connected to a capacitor C1 and whose drain is connected to the connection point of the inductor Lk and the switch Ska.

The switch Skb may be replaced with a diode whose cathode is connected to the capacitor C1 Here, however, the switch Skb that has a lower ON resistance than the diode performs so-called synchronous rectification, and losses in the converter CVk are thus reduced. If the current flowing through the inductor Lk flows backward due to synchronous rectification when the converter CVk has a light load, a resistor may be inserted in series with the inductor Lk to detect the current flowing through the inductor Lk, and the ON signal to the switch Skb may be stopped by the driving circuit DCk when a backflow is detected, for example.

Other elements corresponding to Embodiment 1 are given the same reference signs, and the description thereof is omitted. Also, regarding the power supply device 1b according to Embodiment 2, the timing chart showing the PWM control signals S1, S2, ..., and Sn for a test respectively supplied to the driving circuits DC1, DC2, ..., and DCn, and the flowchart showing the processing procedures carried out by the CPU 11 to determine whether or not the converters CV1, CV2, ..., and CVn are abnormal are the same as those for Embodiment 1. Therefore, the drawings and the description thereof are omitted.

As described above, according to Embodiment 2, in the case where the CPU 11 turns ON/OFF the switch Sja for a time period of T1 such that the output voltage (Vo) supplied to the battery 4 and the load 5 by a single converter CVj (j denotes a natural number that is smaller than or equal to n) out of n converters CV1, CV2, ..., and CVn connected in parallel equals the target voltage (Vt), the CPU 11 determines whether or not the difference between the output voltage (Vo) and the target voltage (Vt) is greater than the predetermined threshold value (Vth).

Based on the result of this determination, whether or not an abnormality is present in the converter CVj that has performed the control for turning ON/OFF the switch Sja is determined.

Therefore, it is possible to discern the presence or absence of an abnormality in a specific converter out of multiphase converters.

Also, according to Embodiments 1 and 2, a DC voltage is applied to the inductors L1, L2, ..., and Ln of the converters CV1, CV2, ..., and CVn via the switches S1a, S2a, ..., and Sna respectively, and the input DC voltage is stepped down or stepped up by performing switching of the currents respectively flowing through the inductors L1, L2, ..., and Ln, using the switches S1a, S2a, ..., and Sna.

Consequently, it is possible to determine whether or not an abnormality is present in the converter CVj that has performed the control for turning ON/OFF the switch Sja in both the case where the converter CVj steps down a DC voltage and the case where the converter CVj steps up a DC voltage.

Furthermore, according to Embodiments 1 and 2, the currents respectively flowing through the inductors L1, L2, ..., and Ln during the OFF periods of the respective switches S1a, S2a, ..., and Sna of the converters CV1, CV2, ..., and CVn are caused to circulate by the switches S1b, S2b, ..., and Snb.

Consequently, it is possible to improve the conversion efficiency compared to the case of using diodes instead of the switches S1b, S2b, ..., and Snb.

Embodiment 3

Embodiment 1 is an embodiment in which the control unit 10 performs a control focusing on the output voltage, whereas Embodiment 2 is an embodiment in which the control unit 10 performs a control focusing on the output current. The control unit 10 supplies the PWM control signals S1, S2, ..., and Sn respectively to the driving circuits DC1, DC2, ..., and DCn such that the duty ratio is changed to be small or large according to whether an error voltage obtained by comparison between the internal reference voltage (not shown in the drawings) and the detection voltage from the current detection circuit 17 is high or low. The output current is thus controlled to be a constant current corresponding to the reference voltage.

In order to prevent the output voltage from exceeding a predetermined voltage, the control unit 10 also limits an increase in the duty ratio of the PWM control signals S1, S2, ..., and Sn to be respectively supplied to the driving circuits DC1, DC2, ..., and DCn, based on the divided voltage from the voltage-dividing circuit 18. If no abnormality is present in the converters CV1, CV2, ..., and CVn, the PWM control signals S1, S2, ..., and Sn respectively supplied to the driving circuits DC1, DC2, ..., and DCn have a phase difference of 2n/n from one another in each control cycle.

Other elements corresponding to Embodiment 1 are given the same reference signs, and the description thereof is omitted.

In Embodiment 3, the CPU 11 determines the presence or absence of an abnormality by driving the converters CV1, CV2, ..., and CVn one by one for a test while the power supply device 1a is not operating, and upon determining that any of the converters are abnormal, operates the power supply device 1a by driving the converters other than the converters determined as being abnormal.

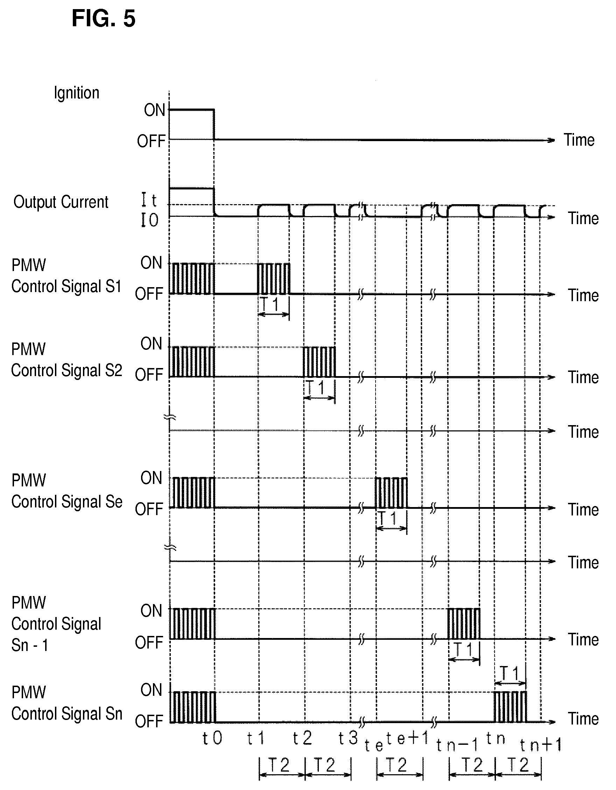

FIG. 5 is a timing chart showing the PWM control signals S1, S2, ..., and Sn for a test respectively supplied to the driving circuits DC1, DC2, ..., and DCn in a power supply device 1a according to Embodiment 3 of the present invention.

FIG. 5 shows the case of an abnormality occurring in a driving circuit DCe (e denotes a natural number that is no less than 3 and no greater than n-2, for example). In each of the seven timing charts shown in FIG. 5, the horizontal axis is the time axis, and the vertical axis indicates, from top to bottom of the drawing, the ON/OFF state of the ignition, the output current, the OFF/ON state of the PWM control signal S1, the OFF/ON state of the PWM control signal S2, ..., the OFF/ON state of the PWM control signal Se, ..., the OFF/ON state of the PWM control signal Sn-1, and the OFF/ON state of the PWM control signal Sn.

If the state of the ignition changes from the ON state to the OFF state at a point in time t0, the PWM control signals S1, S2, ..., Se, ..., and Sn stop, and the converters CV1, CV2, ..., and CVn stop being driven. Therefore, the output current from the power supply device 1a decreases and converges to approximately 0 before or at a point in time t1. Here, the output current at the point in time t1 is assumed to be I0.

During the period from the point in time t1 to the point in time tn+1, the CPU 11 sequentially generates the PWM control signals S1, S2, ..., Se, ..., and Sn at time intervals of T2 such that each signal is generated for a time period of T1 (predetermined time period: T2>T1). The target output current is, for example, a current It (a predetermined current: It=I0+0.4 A) that is greater than the aforementioned current I0 by 0.4 A. The difference between the currents It and I0 is not limited to 0.4 A.

If the generation of the PWM control signal S1 is started at the point in time t1, the CPU 11 detects the output current after the time period of T1 has elapsed since the point in time t1, and then stops generating the PWM control signal S1. If the difference between the output current detected at this time and the current It is greater than a predetermined threshold value, the converter CV1 is determined as being abnormal. In the example shown in FIG. 5, the output current at the time when the time period of T1 has elapsed since the point in time t1 is substantially equal to the current It, and hence the converter CV1 is not determined as being abnormal.

Subsequently, the CPU 11 starts generating the PWM control signal S2 at the point in time t2, which is when the time period of T2 has elapsed since the point in time t1, detects the output current when the time period of T1 has elapsed since the point in time t2, and then stops generating the PWM control signal S2. Whether or not the converter CV1 is abnormal is determined based on the output current detected at this time, in the same manner as in the case of CV1. Thereafter, the determination of the presence or absence of an abnormality is repeatedly performed in the same manner until the determination as to the converters CVn-1 and CVn completes.

While the CPU 11 repeats the determination of an abnormality in the converters CV1, CV2, ..., and CVn, if the difference between the output current and the current It is greater than the predetermined threshold value (e.g., 0.2 A) even though the CPU 11 continuously supplies the PWM control signal Se to the converter CVe for a time period of T1 from a point in time te (see FIG. 5), the converter CVe is determined as being abnormal. The first conceivable reason for the abnormality in the converter CVe is an open fault of the switch Sea. For example, there can be cases where the detected output current is higher than the current It (not shown in the drawings), depending on the nature of the failure that has occurred in the driving circuit DCe.

The following describes the operations of the control unit 10 above, using a flowchart showing the operations.

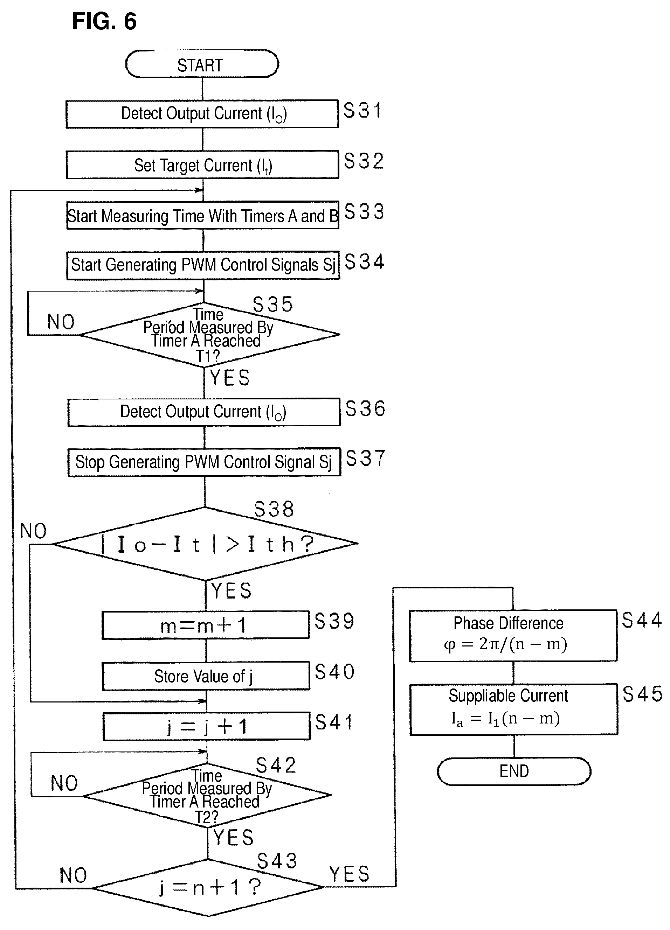

FIG. 6 is a flowchart showing processing procedures carried out by the CPU 11 to determine whether or not the converters CV1, CV2, ..., and CVn in the power supply device 1a according to Embodiment 3 of the present invention are abnormal.

The processing shown in FIG. 6 is started up at, for example, the point in time t1, which is when an appropriate time period has elapsed since the ignition was changed from the ON state to the OFF state at the point in time t0 (see FIG. 2). Steps S32 to S35, S37, and S39 to S45 in the processing shown in FIG. 6 are the same as steps S12 to S15, S17, and S19 to S25 shown in FIG. 3 according to Embodiment 1, and therefore a large part of the description thereof is omitted.

Upon the processing shown in FIG. 6 being started up, the CPU 11 detects the output current (Io) using the current detection circuit 17 and the A/D converter 16 (S31), and sets the target current (It), which is greater than the detected output current Io by 0.4 A for example, as the predetermined current for a test (S32). Subsequently, the CPU 11 starts measuring time using two timers A and B included in the timer 15 (S33), and then starts generating a PWM control signal Sj (S34). From this point in time, the duty ratio of the PWM control signal Sj is controlled such that the output current of a converter CVj equals the target current (It).

Then, upon the time period measured by the timer A reaching the time period of T1 in step S35 (S35:

YES), the CPU 11 detects the output current (Io) (S36), and then stops generating the PWM control signal Sj (S37). Steps S33, S34, S35, and S37 correspond to the driving means.

Subsequently, the CPU 11 determines whether or not the difference (|Io-It|) between the detected output current (Io) and the target current (It) is greater than a predetermined threshold value Ith (e.g., 0.2 A) (S38: corresponding to the determination means), and if the difference is not greater than the predetermined threshold value Ith (S38: NO), i.e., if the converter CVj is determined as being not abnormal, the CPU 11 proceeds to step S41 described below.

If the difference between the output current (Io) and the target current (It) is greater than the predetermined threshold value Ith (S38: YES), i.e., if the converter CVj is determined as being abnormal, the CPU 11 increments m by 1 (S39: corresponding to the counting means) and stores the value of j in the specific area of the RAM 13 (S40: corresponding to the storage means). Consequently, information j that specifies the converter CVj that has been determined as being abnormal is stored in the RAM 13.

As mentioned above, the processing performed in step S41 and the subsequent steps is the same as the processing performed in step S21 and the subsequent steps shown in FIG. 3, and therefore the description of the processing performed in these steps is omitted.

As described above, according to Embodiment 3, in the case where the CPU 11 turns ON/OFF the switch Sja for a time period of T1 such that the output current (Io) supplied to the battery 4 and the load 5 by a single converter CVj (j denotes a natural number that is smaller than or equal to n) out of n converters CV1, CV2, ..., and CVn connected in parallel equals the target current (It), the CPU 11 determines whether or not the difference between the output current (Io) and the target current (It) is greater than the predetermined threshold value (Vth).

Based on the result of this determination, whether or not an abnormality is present in the converter CVj that has performed the control for turning ON/OFF the switch Sja is determined.

Therefore, it is possible to discern the presence or absence of an abnormality in a specific converter out of multiphase converters.

The embodiments disclosed here are to be considered in all respects as illustrative and not limiting. The scope of the present invention is indicated by the claims rather than by the foregoing description, and all changes which come within the meaning and range of equivalency of the claims are intended to be embraced therein. Also, the technical features described in the embodiments can be combined with each other.

Reference Signs List

1a, 1b Power supply device
10 Control unit
11 CPU
17 Current detection circuit
18 Voltage-dividing circuit
CV1, CV2, ..., CVn Converter
DC1, DC2, ..., DCn Driving circuit
S1a, S2a, ..., Sna Switch
S1b, S2b, ..., Snb Switch
L1, L2, ..., Ln Inductor
2 Alternator
3 Power storage element
4 Battery
5 Load

**Claims**

1. A power supply device in which a plurality of converters, each converting a DC voltage by performing switching using a switching element, are connected in parallel, and that supplies, to a load, a sum of output power from the converters, obtained by turning ON respective switching elements of the converters in phases that are different from one another, the power supply device comprising:

   a driving means for turning ON/OFF the switching element of only a given converter out of the converters, for a predetermined period of time, so as to change a voltage that is to be supplied to the load to a predetermined voltage; and
   a determination means for determining, upon the driving means turning ON/OFF the switching element, whether or not a difference between the voltage to be supplied to the load and the predetermined voltage is greater than a predetermined threshold value.

2. A power supply device in which a plurality of converters, each converting a DC voltage by performing switching using a switching element, are connected in parallel, and that supplies, to a load, a sum of output power from the converters, obtained by turning ON respective switching elements of the converters in phases that are different from one another, the power supply device comprising:

   a driving means for turning ON/OFF the switching element of only a given converter out of the converters, for a predetermined period of time, so as to change a current that is to be supplied to the load to a predetermined current; and
   a determination means for determining, upon the driving means turning ON/OFF the switching element, whether or not a difference between the current to be supplied to the load and the predetermined current is greater than a predetermined threshold value.

3. The power supply device according to claim 1 or 2, wherein the driving means is configured to sequentially turn ON/OFF the respective switching elements of all of the converters such that each switching element is turned ON/OFF for a predetermined period of time, and
the power supply device further comprises a counting means for counting the number of converters for which the determination means has determined that the difference is greater than the predetermined threshold value.

4. The power supply device according to claim 3, further comprising:

   a storage means for storing therein information that specifies the converters for which the determination means has determined that the difference is greater than the predetermined threshold value; and
   a first calculation means for calculating a phase difference with which the switching elements are turned ON, by formula (1) below:

$$\varphi = 2\pi/(n\text{-}m) \ \ldots\ldots (1)$$

where

   $\varphi$ denotes the phase difference with which the switching elements are turned ON,
   n denotes the total number of the converters, and
   m denotes the number counted by the counting means,

wherein the driving means is configured to turn ON, with the phase difference calculated by the first calculation means, the respective switching elements of converters other than the converters specified by the information stored in the storage means.

5. The power supply device according to claim 3 or 4, further comprising:

   a second calculation means for calculating a current that can be supplied to the load, by formula (2) below:

$$Ia = I1(n\text{-}m) \ldots\ldots (2)$$

where

Ia denotes the current that can be supplied to the load,

I1 denotes a current that can be supplied to the load by a single converter out of the converters,

n denotes the total number of the converters, and

m denotes the number counted by the counting means,

wherein a current to be supplied to the load is controlled to be smaller than the current calculated by the second calculation means.

**6.** The power supply device according to any one of claims 1 to 5,
wherein each converter:

has an inductor to which the DC voltage is applied via the switching element; and
is configured to step down or step up the DC voltage by performing switching of a current that flows through the inductor, using the switching element.

**7.** The power supply device according to any one of claim 6,
wherein each converter has a second switching element for circulating the current that flows through the corresponding inductor during an OFF period of the corresponding switching element.

**8.** An abnormality determination method for a power supply device in which a plurality of converters, each converting a DC voltage by performing switching using a switching element, are connected in parallel, and that supplies, to a load, a sum of output power from the converters, obtained by turning ON respective switching elements of the converters in phases that are different from one another, the abnormality determination method being for determining whether or not the converters are abnormal, the abnormality determination method comprising:

turning ON/OFF the switching element of only a given converter out of the converters, for a predetermined period of time, so as to change a voltage (or a current) that is to be supplied to the load to a predetermined voltage (or a predetermined current);
determining whether or not a difference between the voltage (or the current) to be supplied to the load and the predetermined voltage (or the predetermined current) is greater than a predetermined threshold value; and
determining that the given converter is abnormal upon determining that the difference is greater than the predetermined threshold value.

FIG. 1

EP 3 065 279 A1

# FIG. 2

# FIG. 3

START

| Detect Output Voltage ($v_O$) | S11 |

| Set Target Voltage ($v_t$) | S12 |

| Start Measuring Time With Timers A and B | S13 |

| Start Generating PWM Control Signals Sj | S14 |

S15
Time Period Measured By Timer A Reached T1?

NO

YES

| Detect Output Volatage ($v_O$) | S16 |

| Stop Generating PWM Control Signal Sj | S17 |

S18
$|Vo-Vt|>Vth?$

NO

YES

| $m=m+1$ | S19 |

| Store Value of j | S20 |

| $j=j+1$ | S21 |

S22
Time Period Measured By Timer A Reached T2?

NO

YES

S23
$j=n+1?$

NO

YES

| Phase Difference $\varphi = 2\pi/(n-m)$ | S24 |

| Suppliable Current $I_a = I_1(n-m)$ | S25 |

END

# FIG. 4

# FIG. 5

# FIG. 6

START

Detect Output Current ($I_O$) — S31

Set Target Current ($I_t$) — S32

Start Measuring Time With Timers A and B — S33

Start Generating PWM Control Signals Sj — S34

S35
Time Period Measured By Timer A Reached T1?
NO / YES

Detect Output Current ($I_O$) — S36

Stop Generating PWM Control Signal Sj — S37

S38
$|Io-It|>Ith$?
NO / YES

m=m+1 — S39

Store Value of j — S40

j = j + 1 — S41

S42
Time Period Measured By Timer A Reached T2?
NO / YES

S43
j = n + 1 ?
NO / YES

Phase Difference
$\varphi = 2\pi/(n-m)$ — S44

Suppliable Current
$I_a = I_1(n-m)$ — S45

END

## INTERNATIONAL SEARCH REPORT

| International application No. |
|---|
| PCT/JP2014/077141 |

| A. CLASSIFICATION OF SUBJECT MATTER |
|---|
| *H02M3/155*(2006.01)i |

According to International Patent Classification (IPC) or to both national classification and IPC

| B. FIELDS SEARCHED |
|---|
| Minimum documentation searched (classification system followed by classification symbols)<br>H02M3/155 |

Documentation searched other than minimum documentation to the extent that such documents are included in the fields searched

| Jitsuyo Shinan Koho | 1922–1996 | Jitsuyo Shinan Toroku Koho | 1996–2014 |
|---|---|---|---|
| Kokai Jitsuyo Shinan Koho | 1971–2014 | Toroku Jitsuyo Shinan Koho | 1994–2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 11-332001 A (Toyota Motor Corp.),<br>30 November 1999 (30.11.1999),<br>paragraphs [0056] to [0074]; fig. 6 to 7, 9 to 12<br>(Family: none) | 1-8 |
| Y | JP 2013-46541 A (Mitsubishi Electric Corp.),<br>04 March 2013 (04.03.2013),<br>paragraphs [0020] to [0026]; fig. 8 to 12<br>& US 2013/0051100 A1 & DE 102012201325 A1 | 1-8 |
| Y | JP 2009-201231 A (Mitsubishi Electric Corp.),<br>03 September 2009 (03.09.2009),<br>claims 5 to 6<br>(Family: none) | 3-7 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 December, 2014 (15.12.14) | 22 December, 2014 (22.12.14) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2014/077141 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2012-50207 A  (Denso Corp.),<br>08 March 2012 (08.03.2012),<br>paragraphs [0017] to [0018], [0041]; fig. 1, 7<br>& DE 102011052922 A1 | 6-7 |
| A | US 6473280 B1  (Joseph C. BUXTON),<br>29 October 2002 (29.10.2002),<br>column 4, lines 33 to 54; column 6, line 1 to<br>column 7, line 48; fig. 1b, 3 to 4<br>(Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002044941 A

- JP 2013046541 A